Europäisches Patentamt

European Patent Office

Office européen des brevets

(11) Publication number: **0 268 927**
**A2**

(12) **EUROPEAN PATENT APPLICATION**

(21) Application number: **87116570.0**

(22) Date of filing: **10.11.87**

(51) Int. Cl.⁴: **A01N 25/10 , A01N 25/26 ,
A01N 25/32 , A01N 57/12**

(30) Priority: **24.11.86 US 934069**

(43) Date of publication of application:
**01.06.88 Bulletin 88/22**

(84) Designated Contracting States:
**AT BE CH DE ES FR GB GR IT LI LU NL SE**

(71) Applicant: **AMERICAN CYANAMID COMPANY
1937 West Main Street P.O. Box 60
Stamford Connecticut 06904-0060(US)**

(72) Inventor: **Cannelongo, Joseph Frederick
9 Revere Road
Piscataway New Jersey 08854(US)**
Inventor: **Ong, Chungjian Jerry
541 Wren Way
Somerville New Jersey(US)**

(74) Representative: **Wächtershäuser, Günter, Dr.
Tal 29
D-8000 München 2(DE)**

(54) **Resin-coated, non-sorptive granular, pesticidal compositions and method for the preparation thereof.**

(57) The present invention relates to novel resin-coated, non-sorptive granular pesticidal compositions containing, as the active ingredient of the resin coating, a pesticidally-effective amount of a pesticide wherein said technical grade of said pesticide has dermal LD50, as measured on rats or rabbits, of less than 50 mg/kg. The novel compositions of the present invention are characterized by markedly reduced mammalian toxicity in comparison to the technical grade pesticide. Further, the present invention also relates to a process for preparing the present safened resin-coated, non-sorptive granular pesticidal compositions.

EP 0 268 927 A2

# RESIN-COATED, NON-SORPTIVE, GRANULAR, PESTICIDAL COMPOSITIONS AND METHOD FOR THE PREPARATION THEREOF

## BACKGROUND OF THE INVENTION

The present invention relates to safened solid resin-coated, non-sorptive granular pesticidal compositions. Previous compositions have observed toxic dermal effects of the active pesticide. Examples of the type of active ingredient safened in the present compositions include 0,0-diethyl S-{[(1,1-dimethylethyl)-thio]methyl}phosphorodithioate, also known as terbufos, and 0,0-diethyl-S-(ethylthiomethyl)-phosphorodithioate, also known as phorate. U.S. Patent 2,586,655, issued to Hook on February 19, 1952, generally discloses these compounds, and U.S. Patent 2,596,076, issued to Hook on May 6, 1952, discloses terbufos, with U.S. Patent 2,759,010, issued to Lorenz et al on August 14, 1956 disclosing phorate.

Both terbufos and phorate are effective soil and systemic insecticide-nematicides and are commercially used throughout the world. Unfortunately, these compounds, although effective insecticide-nematicides, also are toxic to mammals if they should enter the mammal's circulatory system through ingestion, inhalation or dermal absorption. This toxicity is more apparent by the LD50 values of these compounds. The acute oral LD50 value in rats of phorate is 1.6-3.7 mg technical/kg and for terbufos, 1.6 mg technical/kg. The acute dermal toxicities in rats are 2.5-6.2 mg technical phorate/kg and 7.4 mg technical terbufos/kg ani mal. Likewise, the acute dermal toxicities on rabbits are 3.1-6.4 mg technical phorate/kg animal and 1.0 mg technical terbufos/kg animal.

It can be seen, therefore, that there is potential hazard for individuals exposed to handling the pesticides, such as terbufos and phorate, as well as other such pesticides with acute oral and/or acute dermal toxicities less than about 50 mg/kg. Those individuals exposed to the manufacture, purchasing, handling, transportation and use of such pesticides are at high risk of exposure. These potential health safety problems have spurred attempts to improve the LD50 values of these pesticides and to provide compositions which exhibit better margins of safety than originally available. U.S. Patent 4,059,700 issued to Lindsay on November 22, 1977, relates to a process to improve the safety of terbufos. Montmorillonite clay is used as a carrier for terbufos and phorate. This composition provides a product with an LD50 dermal toxicity, on rabbits, of about 27-37 mg/kg. Thus, the dermal toxicity is 2 to 3 times less toxic than the compositions available prior to the Lindsay invention. U.S. Patent 4,485,103 and 4,343,790, issued to Pasarela on November 27, 1984 and August 10, 1982, respectively, also improve the margin of safety of insecticide-nematicide compositions containing terbufos or phorate. Coating an inert sorptive or non-sorptive granular carrier impregnated or coated with terbufos or phorate with a finely divided sorptive substrate and an acrylic polymer provides a safer composition as evidenced by rabbit dermal LD50 values of about 40 and 80 mg/kg.

Even though these inventions improve the dermal toxicities of pesticides such as terbufos and phorate, an effective resin-type reduced toxicity pesticidal composition with residual activity and good biological activity was still needed. U.S. Patent 4,554,155 issued to Allan et al on November 19, 1985 discloses controlled-release compositions which may contain a wide variety of listed pes ticides, including phorate. These controlled-release compositions specifically contain kraft lignin and a bio-degradable water-insoluble organic polymer that releases the pesticide by structural disintegration of the outer surfaces. As such, these compositions are based on erosion of the matrix to control the release of pesticide. Exposure of the surfaces of those compositions to the environment results in the loss of the structural integrity of the polymer and/or fracture thereof. Therefore, new surfaces of the biologically active material-polymer are exposed to the environment for further release of the component.

Resins also are used in animal collars and tags to control a variety of ectoparasites which infest such animals. For instance, U.S. Patent No. 4,150,109 issued to Dick et al on April 17, 1979 discloses animal pesticidal collars containing diazinone or diazoxone, a solid macromolecular substance chosen from solid vinyl and vinylidene substances and a plasticizer. About forty organo-phosphates are listed for possible incorporation into these animal collars, but terbufos and phorate are not among the pesticides listed. This is not, however, altogether surprising since terbufos and phorate are soil and plant systemic insecticides and are extremely toxic to mammals.

Another animal collar containing a pesticide is disclosed in U.S. Patents 4,134,977 and 4,158,051, issued to Greenberg on January 16, 1979 and June 12, 1979, respectively. The Greenberg collars are prepared with dimethyl 1,2-dibromo-2,2-dichloroethyl phosphate, commonly referred to as naled, a plasticized polyvinyl chloride, a substantially non-volatile carbamate and a surface porosity control agent such as chloro-acetaldehyde, chloral, bromoacetaldehyde, bromal or the like. Those compositions provide controlled release of the insecticide as a vapor to surround the animal and as a powder that migrates over the coat of the animal.

U.S. Patent 4,198,782 issued to Kydonleus on April 22, 1980, discloses a method for making polymeric controlled-release pesticides by granulating a laminated sheeting material comprising a non-porous polymeric sheet, a polymeric core film containing phorate or other insecticide and a second solid non-porous polymeric sheet adhered to the insecticide-containing polymeric core material. The thus-prepared sandwich is then chopped into granulated particles. Insect control is obtained with the granulated insecticide compositions prepared as described. However, unfortunately when the laminated materials are cut to the sizes necessary for use in the field, extended activity is lost and little or no safening appears to be achieved.

Other resin compositions are disclosed in U.S. Patent 4,041,151 issued to Milionis et al on August 9, 1977 and U.S. Patent 4,145,409 issued to Pasarela on March 20, 1979. The preparation of insecticidal and acaricidal resin compositions formed into flexible collars for attaching to animals to protect said animals against attack and/or infestation by insects and acarids is disclosed in those two U.S. patents. The compositions, however, are primarily designed to deliver an insecticidal or acaridicidal agent having relatively low mammalian toxicity onto the coat and body of an animal. Pesticides with high mammalian toxicity are not listed for incorporation into resins or that such incorporation may provide a concentrate or composition with markedly improved safety.

Thus, although the above-described references provide phorate, terbufos and/or other pesticide compositions with reduced dermal toxicity and/or extended residual activity, the disclosed technology seems insufficient to lower the margin of safety or the oral and/or dermal LD50 values low enough to remove said pesticides from the hazardous pesticide catagory.

U.S. Application for Letters Patent Serial Number     , Cannelango, and U.S. Application for Letters Patent Serial Number     , Mahmud et al both filed concurrently herewith and incorporated herein by reference thereof provide compositions for safening the hazards asso ciated with the pesticides of the present invention. However, the Cannelongo application relates to a extruded suspension resin-based pesticidal composition and the Mahmud et al application relates to sorptive granular pesticidal compositions containing a dispersion resin. As such, a non-sorptive based granular system still is not available with the safening properties and biological activity desired.

## SUMMARY OF THE INVENTION

The present invention provides a solution to providing a resin-coated non-sorptive granular composition unanswered successfully by the state of the art.

It is an object of the present invention, therefore, to provide pesticidal compositions and processes for the preparation thereof wherein said composition contains a highly toxic pesticide, selected polyvinyl chloride homopolymer or copolymer dispersion resin having appropriate physical and chemical characteristics, selected plasticizers and selected resin stabilizers. Surprisingly, these compositions provide an agronomically useful product that is characterized by markedly reduced mammalian toxicity, in comparison to technical grade pesticide and conventional such compositions.

It is an additional object of the present invention to provide pesticidal compositions, particularly compositions containing the toxic pesticides with low LD50s, and to provide such pesticides in a form having significantly improved dermal mammalian toxicity, improved insecticidal-nematicidal activity and extended residual effectiveness.

A further object of this invention is to provide pesticidal compositions which provide a margin of safety otherwise not found in previously-available compositions containing said pesticides.

These and other objects of the present invention will become more apparent by the detailed description of the invention provided hereinbelow.

## DETAILED DESCRIPTION OF THE INVENTION

The present invention relates to novel, resin-coated, non-sorptive granular pesticidal compositions for controlling soil borne pests and process for the preparation thereof. The novel compositions of the present invention contains a pesticide, the technical grade of said pesticide having a dermal LD50, as measured on rats or rabbits, of less than 50 mg/kg. The invention also relates to the process for the preparation of the present pesticidal compositions.

The present invention comprises about 20.0% to 80.0%, by weight, of the finished product, of an inert, non-sorptive, granular carrier, said carrier coated with a pesticidal resin composition containing, as the active ingredient, about 1.0% to 30.0%, by weight, of the finished product, of a pesticide, the technical grade of said pesticide having a dermal LD50, as measured on rats or rabbits, of less than 50 mg/kg; about 5.0% to 40.0%, by weight, of the final product, of a polyvinyl chloride homopolymer or copolymer dispersion resin having a weight average molecular weight of about 200,000 to 400,000 and an inherent viscosity measured by ASTM D 1243 of about 1.0 to 1.32; about 0.1% to 4.0%, by weight, of a stabilizing agent or mixture of stabilizing agents for said resin; and about 0.0% to 40.0% by weight of a secondary plasticizing agent.

Pesticides useful in the products of the present invention are soil insecticides, systemic insecticides, nematicides and mollussicides and include, but are not limited to, 0,0-diethyl S-[(1,1-dimethylethyl)thio]-methyl phosphorodithioate, (terbufos); 0,0-diethyl S-(ethylthiomethyl)phosphorodithioate, (phorate); (±)-O-ethyl S-phenylethylphosphonodithioate, (fonofos); diethyl 1,3-dithiolan-2-ylidene phosphoramidate, (phosfolan); 2-methyl-2-(methylthio)propionaldehyde O-methylcarbamoyloxine (aldicarb); O,O-diethyl 2-ethylthioethyl phosphorothioate (demeton); O-ethyl S,S-dipropyl phosphorodithioate (ethoprophos); O,O-diethyl O-2-pyrazinyl phosphorothioate (thi onazin); and the like. Terbufos and phorate are especially preferred in the compositions of this invention because both are excellent plasticizing agents, as well as superior soil and systemic pesticides.

These two compounds are highly effective for controlling soil borne insects and nematodes which attack the root systems of plants. They also are effective for controlling chewing and puncturing insects and arachnids which feed on the foliage or fluids of plants.

Polymers useful in the compositions of the present invention include polyvinyl chloride dispersion resin homopolymer/copolymer resins having a weight average molecular weight of about 200,000 to 400,000, preferably 260,000 to 340,000. The polymers of the invention are available from a variety of polymer manufacturers, such as B. F. Goodrich dispersion resin Geon® 138 resin that has a weight average molecular weight of about 300,000 and an inherent viscosity of 1.2 measured by ASTM D 1243.

Typical properties of resins useful in the compositions of the present invention are listed below:

| Typical Properties | Resins | |
| --- | --- | --- |
| | 137[5] | 138 |
| Inherent viscosity, ASTM D 1243 | 1.15 | 1.20 |
| Specific gravity (approx.) | 1.40 | — |
| FDA acceptable | Limited | Limited |
| Flow Properties[2] Brookfield LVF viscosity, mPa·s or cP, SPI-VD-T$_1$ | | |
| 1 hour at    6 RPM | 15000 | 3700 |
| 12 RPM | 13800 | 3000 |
| 1 day at    6 RPM | 19400 | 8400 |
| 12 RPM | 16800 | 8000 |
| 1 week at    6 RPM | 25800 | 18000 |
| 12 RPM | 22300 | 14000 |
| 1 month at    6 RPM | 61500 | 30000 |
| 12 RPM | 59500 | 20000 |
| Severs efflux, BFG-1010-A, gm/100 seconds | 10.0 | 20.0 |
| Severs viscosity, mPa·s or cP | 23700 | 11850 |

4

| | | |
|---|---|---|
| Particle size, microns, avg. | 1.2 | 0.92 |
| Vinyl dispersion, microns, max. | 60 | 30 |
| North fineness, SPI-VD-T10 | 4.0 | 5.0 |
| Gel temperature, $^{\circ}C(^{\circ}F)$ SPI-VD-T5 | 71(160) | 66(150) |
| Clarity, percent of light transmitted through 20 mil film[3] | 80 | 91 |
| Gloss Gardner reflectance at 60° angle[3] | 40 | 91 |
| Heat stability, aged at 191°C(375°F),[3,4] | | |
| minutes to yellow | 30[6] | 30[6] |
| minutes to dark | 60[6] | 60[6] |
| Film Properties, ASTM D 882 Tensile strength, MPa (psi) at | | |
| 121°C(250°F) | 6.2(900) | 5.0(730) |
| 135°C(275°F) | 10.9(1,577) | 9.5(1,380) |
| 149°C(300°F) | 11.7(1,705) | 16.4(2,375) |
| 163°C(325°F) | 12.3(1,783) | 17.8(2,580) |
| 177°C(350°F) | 11.0(1,590) | 17.6(2,562) |
| 191°C(375°F) | 9.5(1,373) | 17.4(2,525) |
| 204°C(400°F) | 7.0(1,013) | 16.6(2,410) |
| Elongation, % at | | |
| 121°C(250°F) | 150 | 100 |
| 135°C(275°F) | 250 | 200 |
| 149°C(300°F) | 365 | 330 |
| 163°C(325°F) | 380 | 380 |
| 177°C(350°F) | 340 | 395 |
| 191°C(375°F) | 287 | 375 |
| 204°C(400°F) | 267 | 360 |

[1]FDA acceptable under "prior sanction" for food contact applications.

[2]Recipe: Geon® resin, 100 parts; DOP, 60 parts.

[3]20-mil film fused 5 minutes at 177°C(350°F).

[4]Geon® resin, 100 parts; DOP, 60; ESO, 5; stabilizer, 3.

[5]Recipe, 100 parts; DOP, 80 parts.

[6]Heat aged at 163°C(325°F).

*Note: "A" version only.

Among the secondary plasticizers useful in the preparation of the compositions of this invention are the organic phthalates, such as butyl benzyl phthalate and diisononyl phthalate, dibutyl phthalates, di-2-ethylhexyl phthalate, dibasic acid esters such as di-2-ethylhexyl adipate, organic phosphates such as tricresyl phosphate, epoxidized soybean oil, organic trimellitates, such as trioctyl mellitate or organic citrates such as acetyl tributylcitrate, and polyesters such as polyester adipate, or mixtures thereof.

Stabilizing agents for the resin useful in the compositions of the present invention include calcium/zinc stearate, epoxidized soybean oil, organic tin stabilizers, dibasic lead phosphite, organic barium stabilizers and mixtures thereof including salts of heavy metals, alkali metals or alkaline earth metals combined with long chain fatty acids and epoxidized soybean or tallate oils.

Suitable non-sorptive granular carriers useful in the present invention include sand, crushed marble, treated limestone, glass beads, or mixtures thereof and the like.

Preferred non-sorptive granular compositions of the invention comprise about 40.0% to 80.0%, by weight, of an inert, non-sorptive granular carrier; about 2.0% to 20.0%, by weight, of a pesticide, preferably a soil insecticide, systemic insecticide or nematicide; about 10.0% to 30.0%, by weight, of a polyvinyl chloride homopolymer or copolymer dispersion resin having a weight average molecular weight of about 260,000 to 340,000 and an inherent viscosity of about 1.13 to 1.26 as measured by ASTM D 1243; about 1.0% to 15.0%, by weight, of a secondary plasticizing agent; about 0.2% to 1.0%, by weight, of calcium/zinc stearate for said resin; and about 0.2% to 1.0%, by weight, of epoxidized soybean oil stabilizing-plasticizing agent for said resin.

The compositions of the present invention are prepared by admixing about 1.0% to 30.0%, preferably about 2.0% to 20.0%, by weight, based on the finished coated granular product, of a pesticide, the technical grade of said pesticide having a dermal LD50, as measured on rats or rabbits, of less than 50 mg/kg with about 0.0% to 40.0%, preferably 1.0% to 15.0%, by weight, of a secondary plasticizing agent and about 0.0% to 2.0%, preferably 0.2% to 1.0%, by weight, of epoxidized soybean or tallate oil stabilizing-plasticizing agent. This mixture is stirred with a mixer at room temperature (25°C). When the mixture is essentially homogeneous, about 5.0% to 40.0%, preferably 10.0% to 30.0%, by weight, of a polyvinyl chloride homopolymer or copolymer dispersion resin having a weight average molecular weight of about 200,000 to 400,000 and about 0.0% to 2.0%, preferably 0.2% to 1.0%, by weight, of a stabilizing agent for said resin are added to the pesticide mixture and stirred in a mixer at room temperature until the resin mixture and pesticide mixture are blended into one homogeneous mixture.

Thereafter, in suitable coating equipment such as a fluidized bed reactor, about 20.0% to 80.0%, preferably 40.0% to 80.0%, by weight of the finished coated granular product, of an inert, non-sorptive, granular carrier is introduced into the fluidized bed reactor. A stream of hot gas, preferably air, heated to about 93.3°C (200°F) to 148.9°C (300°F), preferably 107.2°C (225°F) to 135.0°C (275°F), is blown through an air distribution plate in the bottom of the reactor and suspends the solid carrier particles on an upward-moving hot air stream. When the carrier particles are heated to about 93.3°C (200°F) to 148.9°C (300°F), the homogeneous plastisol mixture is sprayed through a nozzle located in the center of the air distribution plate at the bottom of the fluidized bed reactor. The stream of hot air, in addition to suspending the carrier and heating it to about 93.3°C (200°F) to 148.9°C (300°F), also serves to fuse the plastisol coating on the particles. Fusion is usually accomplished in about 6 to 15 minutes. When coating of the particles is complete, the heater for the air or gas stream is shut off, and the coated particles are permitted to cool. When the coated particles have cooled, the air or gas stream is shut off and the finished product, i.e. the pesticidal resin coated, non-sorptive, granular particles are discharged. The resulting product is characterized by a relatively high bulk density which permits directed application of the coated granules into the furrow or beside the planted crop rows thereby inhibiting the particles' movement by wind or rain from the locus of application.

This product also has advantage in that dusting is reduced and/or eliminated thereby decreasing release of toxicant pesticide, a significant safety advantage in handling, transporting and applying the pesticide. Finally, the compositions of the present invention are also characterized by significantly reduced acute dermal mammalian toxicity in comparison to the technical grade of the pesticide from which it is formulated, as well as in comparison to conventional compositions containing said pesticides.

Control of soil borne pests and protection of planted and/or growing crops from attack by such pests is generally achieved with the compositions of this invention, by applying to the soil in which said pests are present and/or said crops are planted and/or growing, a sufficient amount of said composition to provide about 0.25 to 8.0 kg/ha, preferably 0.25 to 4.0 kg/ha, of the pesticide to the locus of treatment.

Other advantages of the compositions of this invention are apparent from the examples setforth hereinbelow which examples are illustrative of the invention and not limitative thereof.

## EXAMPLE 1

### Preparation of resin-coated, non-sorptive, granular pesticidal compositions

In accordance with the process of the present invention, 475.85 g of technical grade terbufos, 86% purity, is mixed in a mixer with 30.7 g of butyl benzyl phthalate and 21.49 g of epoxidized soybean oil at about 25°C until the mixture is homogeneous. To this mixture is added 518.83 g of a polyvinyl chloride (PVC) dispersion resin having a weight average molecular weight of 300,000 and an inherent viscosity measured by ASTM D 1243 of 1.2 and containing 21.49 g of Ca/Zn stearate. The mixture is then stirred at room temperature (25°C) in a mixer until the pesticide mixture and resin mixture are blended into one homogeneous plastisol mixture. Thereafter, 2001.64 g of sand are introduced into a fluidized bed reactor which is equipped with an air distribution plate in the bottom thereof. This air distribution plate has a multiplicity of perforations therein to permit the passage of air through the plate. A nozzle is also provided in the center of the plate to permit introduction of liquids into the chamber after the particulate solids have been introduced into the fluidized bed reactor and suspended by an upward-moving stream of hot air. A stream of hot air is blown through the perforated air distribution plate and suspends the sand in the chamber. The temperature in the chamber is raised to 149°C (300°F) and maintained there while the plastisol mixture, previously prepared, is sprayed into the chamber with the fluidized bed of sand. The sand circulates in the chamber so that the particles are essentially uniformly coated with the pesticide-resin coating. Heating is continued until the pesticide-resin coating is fused on the sand granules. The heat is then turned off, and the fluidized bed of coated sand granules is permitted to cool. When the coated particles are cool, the air stream is shut off, and the coated granules are discharged from the reactor.

The coated particles are then submitted for evaluation and determination of the acute dermal LD50 of the product. Dermal toxicity of compositions of the present invention are determined by the following procedure using male albino rabbits as the test animals.

## Materials

Five male albino rabbits weighing approximately 2.2 to 3.5 kilograms are selected for each dosage level. The hair is shaved from the entire trunk. Saran tubing or "Vinylite" film, VU 1900, 12 inches wide, 0.04 millimeters thick and of suitable length to fit around the rabbit is used. One felt cloth bandage measuring approximately $9 \times 18$ inches is used and four pieces of 1 1/2 inches adhesive tape approximately 14 inches long are used.

## Procedure for Solid Materials

The granular composition to be tested is placed in the center of the plastic film and is moistened with water. The rabbit's underside is moistened with water, and the animal is placed belly down on the material. The plastic film is then brought up and around the animal and secured at each end with strips of adhesive tape. The felt cloth is then placed under the belly and brought up and around the animal and secured to the body with the remaining two strips of adhesive tape.

## Procedure for Liquid Materials

The animal is placed on the plastic film and wrapped, and the film secured with adhesive tape. The test material is then injected under the plastic with an appropriate size needle and syringe. Then, the felt cloth is placed under the belly and brought up around the animal and secured with the two remaining strips of adhesive tape. This forms a "cuff".

## Evaluation

Twenty-four hours after dosing, the "cuff" is removed, and any remaining material is brushed away. If the material cannot be removed, the animal is fitted with a fiber collar which prevents the animal from licking the treatment area. The animals are observed for 14 days, postdosing, noting signs of toxicity, skin irritation and mortality. At the end of the 14 days, the animals are sacrificed and weighed.

The dermal toxicity of the above described composition, as measured on rabbits, is 130 mg/kg.

**Claims**

1. A resin-coated, non-sorptive granular pesticidal composition comprising: about 20.0% to 80.0%, by weight of the finished product, of an inert, non-sorptive, granular carrier; and the remainder a pesticidal resin composition coating, wherein said coating contains, as the active ingredient, about 1.0% to 30.0%, by weight of the finished product, of a pesticide, the technical grade of said pesticide having an acute dermal LD50, as measured on rats or rabbits, of less than 50 mg/kg; about 5.0% to 40.0%, by weight of the finished product, of a polyvinyl chloride homopolymer or copolymer dispersion resin having a weight average molecular weight of about 200,000 to 400,000 and an inherent viscosity measured by ASTM D 1243 of about 1.0 to 1.32; about 0.1% to 4.0%, by weight, of a stabilizing agent or mixture of stabilizing agents for said resin; and about 0.0% to 40.0%, by weight, of a plasticizing agent; and wherein said composition has a reduced mammalian toxicity.

2. A composition according to Claim 1, wherein said inert, non-sorptive granular carrier is sand, crushed marble, treated limestone, glass beads or mixtures thereof.

3. A composition according to Claim 2, wherein said pesticide is O,O-diethyl S-{[(1,1-dimethylethyl)-thio]methyl}phosphorodithioate (terbufos); O,O-diethyl S-(ethylthiomethyl)phosphorodithioate (phorate); diethyl 1,3-dithiolan-2-ylidenephosphoramidate (phosfolan); 2-methyl-2-(methylthio)propanal O-[-(methylcarbamoyloxine (aldicarb); O,O-diethyl 2-ethylthioethyl phosphorothioate (demeton); O-ethyl S,S-dipropyl phosphorodithioate (ethoprophos); O,O-diethyl O-2-pyrazinyl phosphorothioate (thionazin); or (±)-O-ethyl S-phenyl ethylphosphorodithioate (fonofos).

4. A composition according to Claim 3, wherein said polyvinyl chloride resin has a weight average molecular weight of about 260,000 to 340,000 and an inherent viscosity of about 1.13 to 1.26 measured by ASTM D 1243.

5. A composition according to Claim 4, wherein said plasticizing agent is butyl benzyl phthalate, diisononyl phthalate, dibutyl phthalate, di-2-ethylhexyl phthalate, di-2-ethylhexyl adipate, trioctylmellitate, tricresyl phosphate, epoxidized soybean oil, dipropylene glycol benzoate, acetyltributyl citrate or polyester adipate, or mixtures thereof.

6. A composition according to Claim 5, wherein said stabilizer is calcium/zinc stearate, epoxidized soybean oil, organic tin stabilizer, dibasic lead phosphite, organic barium stabilizer or mixtures thereof including salts of heavy metals, alkali metals or alkaline earth metals combined with long chain fatty acids and epoxidized soybean or tallate oils.

7. A composition according to Claim 1, wherein said pesticidal is O,O-diethyl S-{[(1,1-dimethylethyl)-thio]methyl}phosphorodithioate.

8. A composition according to Claim 6, wherein said pesticidal is O,O-diethyl S-{[(1,1-dimethylethyl)-thio]methyl}phosphorodithioate.

9. A composition according to Claim 1, wherein said pesticide is O,O-diethyl S-(ethylthiomethyl)-phosphorodithioate.

10. A composition according to Claim 6, wherein said pesticide is O,O-diethyl S-(ethylthiomethyl)-phosphorodithioate.

11. A composition according to Claim 6, wherein said carrier is about 40.0% to 80.0%, by weight, of sand; and wherein said coating is about 10.0% to 30.0%, by weight, of a polyvinyl chloride dispersion resin having a weight average molecular weight of about 300,000 and an inherent viscosity measured by ASTM D 1243 of 1.2; about 1.0% to 15.0%, by weight, of butyl benzyl phthalate; about 0.2% to 1.0%, by weight, of calcium/zinc stearate and about 0.2% to 1.0%, by weight, of epoxidized soybean oil.

12. A process for the preparation of resin-coated, non-sorptive, granular pesticidal compositions, said process comprising: admixing about 1.0% to 30.0%, by weight of the finished product, of a pesticide, the technical grade of said pesticide having an acute dermal LD50, as measured on rats or rabbits, of less than 50 mg/kg, with about 0.0% to 40.0%, by weight, of a plasticizing agent and about 0.0% to 2.0%, by weight, of a stabilizing-plasticizing agent; stirring the thus-prepared mixture at room temperature until it is homogeneous; admixing therewith about 5.0% to 40.0%, by weight, of a polyvinyl chloride homopolymer or copolymer dispersion resin, having a weight average molecular weight of from 200,000 to 400,000 with about 0.0% to 2.0%, by weight, of a stabilizing agent for said resin; continuing mixing at room temperature until the resin mixture and pesticidal mixture are blended into one homogeneous mixture; thereafter spraying the thus-prepared resin-pesticide mixture onto non-sorptive granules heated to a temperature of about 93°C (200°F) to 149°C (300°F) and continuing spraying said non-sorptive granules with said pesticide-resin mixture until said granules are coated with said mixture and said pesticide-resin mixture is fused on the surface of said particles.

13. A process according to Claim 12 additionally comprising: introducing said non-sorptive granules into a fluidized bed reactor; suspending said granules in said reactor with an upward moving stream of hot gas; heating said granules by said hot gas to a temperature about 93°C (200°F) to 149°C (300°F); spraying said granules with said pesticidal-resin mixture until said granules are coated and said coating is fused; coating said resin-coated, pesticidal granules; and discharging said granules from said reactor.

14. A process according to Claim 13, wherein said temperature is about 107.2°C (225°F) to 135.0°C (275°F).

15. A process according to Claim 14, wherein said coating contains about 2.0% to 20.0%. by weight of finished product, of O,O-diethyl S-{[(1,1-dimethylethyl)thio]methyl}phosphorodithioate (terbufos); O,O-diethyl S-(ethylthiomethyl)phosphorodithioate (phorate); diethyl 1,3-dithiolan-2-ylidenephosphoramidate (phosfolan); 2-methyl-2-(methylthio)propanal O-[(methylcarbamoyloxine (aldicarb); O,O-diethyl 2-ethylthioethyl phosphorothioate (demeton); O-ethyl S,S-dipropyl phosphorodithioate (ethoprophos); O,O-diethyl O-2-pyrazinyl phosphorothioate (thionazin); (±)-O-ethyl S-phenyl ethylphosphorodithioate (fonofos); or mixtures thereof; about 10.0% to 30.0% by weight of said finished product of said polyvinyl resin having a weight average molecular weight of about 300,000 and an inherent viscosity, as measured by ASTM D, about 1.0% to 1.5%, by weight of finished product of butylbenzyl phthalate plasticizer; about 0.2% to 1.0%, by weight of the finished product of calcium/zinc stearate stabilizing agent for said resin; about 0.2% to 1.0%, by weight of the finished product, of epoxidized soybean oil stabilizing plasticizing agent; and about 40.0% to 80.0%, by weight of the finished product, of sand carrier.

16. A process according to Claim 15, wherein said pesticide is O,O-diethyl S-{[(1,1-dimethylethyl)thio]-methyl}phosphorodithioate.

17. A process according to Claim 15, wherein said pesticide is O,O-diethyl S-(ethylthiomethyl)-phosphorodithioate

18. A method for controlling soil-borne pests, said method comprising: applying to soil in which said pests are present, a pesticidally-effective amount of a resin-coated, pesticidal non-sorptive carrier composition containing about 20.0% to 80.0%, by weight of the finished product, of an inert, non-sorptive, granular carrier and a pesticidal resin coating composition containing, as the active ingredient, about 1.0% to 30.0% by weight of the finished product, of a pesticide, the technical grade of said pesticide having an acute dermal LD50, as measured on rats or rabbits, of less than 50 mg/kg; about 5.0% to 40.0%, by weight of the finished product, of a polyvinyl chloride homopolymer or copolymer dispersion resin having a weight average molecular weight of about 200,000 to 400,000 and an inherent viscosity, as measured by ASTM D 1243, of about 1.0 to 1.32; about 0.1% to 4.0%, by weight of the finished product, of a stabilizing agent or mixture of stabilizing agents for said resin; and about 0.0% to 40.0%, by weight of the finished product, of a plasticizing agent; wherein said composition has a reduced mammalian toxicity.

19. A method according to Claim 18, wherein said granular carrier is sand, crushed marble, treated limestone, glass beads, or mixtures thereof.

20. A method according to Claim 19, wherein said pesticide is O,O-diethyl S-{[(1,1-dimethylethyl)thio]-methyl }phosphorodithioate (terbufos); O,O-diethyl S-(ethylthiomethyl)phosphorodithioate (phorate); diethyl 1,3-dithiolan-2-ylidenephosphoramidate (phosfolan); 2-methyl-2-(methylthio)propanal O-[-(methylcarbamoyloxine (aldicarb); O,O-diethyl 2-ethylthioethyl phosphorothioate (demeton); O-ethyl S,S-dipropyl phosphorodithioate (ethoprophos); O,O-diethyl O-2-pyrazinyl phosphorothioate (thionazin); (±)-O-ethyl S-phenyl ethylphosphorodithioate (fonofos); or mixtures thereof.

21. A method according to Claim 20, wherein said pesticide is O,O-diethyl S-{[(1,1-dimethylethyl)thio]-methyl}phosphorodithioate.

22. A method according to Claim 20, wherein said pesticide is O,O-diethyl S-(ethylthiomethyl)-phosphorodithioate.

23. A method for protecting plants from attack by insects, nematodes and mollusks, said method comprising: applying to the soil in which said plants are planted or growing, an insecticidally-nematicidally- or molluscicidally-effective amount of a resin-coated, pesticidal non-sorptive carrier composition containing: about 20.0% to 80.0% by weight of the finished product, of an inert, non-sorptive, granular carrier and a pesticidal resin-coating composition containing, as the active ingredient, about 1.0% to 30.0% by weight of the finished product, of a pesticide, the technical grade of said pesticide having an acute dermal LD50, as measured on rats or rabbits, of less than 50 mg/kg; about 5.0% to 40.0% by weight ofd the finished product of a polyvinyl chloride homopolymer or copolymer dispersion resin having a weight average molecular weight of about 200,000 to 400,000 and an inherent viscosity, as measured by ASTM D 1243, of about 1.0 to 1.32; about 0.1% to 4.0% by weight of the finished product, of a stabilizing agent or mixture of stabilizing agents for said resin; and about 0.0% to 40.0%, by weight of the finished product, of a plasticizing agent; wherein said composition has a reduced mammalian toxicity.

24. A method according to Claim 23, wherein said granular carrier is sand, crushed marble, treated limestone glass beads, or mixtures thereof.

25. A method according to Claim 23, wherein said pesticide is O,O-diethyl S-{[(1,1-dimethylethyl)thio]-methyl}phosphorodithioate (terbufos); O,O-diethyl S-(ethylthiomethyl)phosphorodithioate (phorate); diethyl 1,3-dithiolan-2-ylidenephosphoramidate (phosfolan); 2-methyl-2-(methylthio)propanal O-[-(methylcarbamoyloxine (aldicarb); O,O-diethyl 2-ethylthioethyl phosphorothioate (demeton); O-ethyl S,S-dipropyl phosphorodithioate (ethoprophos); O,O-diethyl O-2-pyrazinyl phosphorothioate (thionazin); (±)-O-ethyl S-phenyl ethylphosphorodithioate (fonofos); or mixtures thereof.

26. A method according to Claim 25, wherein said pesticide is O,O-diethyl S-{[(1,1-dimethylethyl)thio]-methyl}phosphorodithioate.

27. A method according to Claim 25, wherein said pesticide is O,O-diethyl S-(ethylthiomethyl)-phosphorodithioate.